(19) **Europäisches Patentamt / European Patent Office / Office européen des brevets**

(11) **EP 4 733 348 A1**

(12) **EUROPEAN PATENT APPLICATION**
published in accordance with Art. 153(4) EPC

(43) Date of publication:
**29.04.2026 Bulletin 2026/18**

(21) Application number: **24862457.9**

(22) Date of filing: **26.07.2024**

(51) International Patent Classification (IPC):
*C08J 5/18* (2006.01)   *B29C 55/06* (2006.01)
*B32B 15/09* (2006.01)   *B32B 27/36* (2006.01)
*B29K 67/00* (2006.01)

(52) Cooperative Patent Classification (CPC):
**B29C 55/06; B32B 15/09; B32B 27/36; C08J 5/18;**
B29K 2067/00

(86) International application number:
**PCT/JP2024/026880**

(87) International publication number:
**WO 2025/052801 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 JP 2023144918**

(71) Applicant: **JFE Steel Corporation
Tokyo, 100-0011 (JP)**

(72) Inventors:
• **INAMORI Tatsuki**
  **Tokyo 100-0011 (JP)**
• **FUJIMOTO Soichi**
  **Tokyo 100-0011 (JP)**
• **YAMANAKA Yoichiro**
  **Tokyo 100-0011 (JP)**

(74) Representative: **Haseltine Lake Kempner LLP
One Portwall Square
Portwall Lane
Bristol BS1 6BH (GB)**

(54) **POLYESTER FILM, POLYESTER FILM PRODUCTION METHOD, LAMINATED METAL PLATE, LAMINATED METAL PLATE PRODUCTION METHOD, AND LAMINATED METAL CONTAINER**

(57)  A polyester film, a laminated metal sheet, and a laminated metal container are provided which can be produced stably in an energy-saving manner at any stage of their production. For example, a polyester film, etc. is provided which has a sufficient corrosion resistance after it is subjected to a process for forming a two-piece can or the like. The polyester film contains a polyester including polyethylene terephthalate as a component. In the polyester film, net intensities of pole figures, obtained by X-ray diffractometry and indicating a crystal orientation distribution, satisfy predetermined conditions.

## FIG. 1

## EP 4 733 348 A1

**Description**

Technical Field

The present invention relates to a polyester film for use in a laminated metal sheet, a method for producing the polyester film, a laminated metal sheet, a method for producing the laminated metal sheet, and a laminated metal container.

Background Art

A sheet of a metal such as tin-free steel (TFS) or aluminum is used as a material in a metal container such as a food can, a beverage can, or an 18-liter can. Such a metal sheet has been subjected to painting and baking to impart corrosion resistance, durability, weather resistance, etc. to the metal sheet.

Baking of a metal sheet is a complicated process and requires a lot of processing time. Further, a large amount of a solvent is discharged upon painting of the metal sheet. Therefore, in place of such painted metal sheets, laminated metal sheets, each having a thermoplastic resin film laminated to a metal sheet, have now been used.

Examples of thermoplastic resin films for use in laminated metal sheets include a polypropylene (PP) film, a polyethylene terephthalate (PET) film, and a polybutylene terephthalate (PBT) film.

These thermoplastic resin films are required to have a corrosion resistance, an adhesion to a metal sheet when they are formed into a laminated metal sheet, and a container formability when a laminated metal sheet is formed into a container.

Metal containers are classified broadly into two-piece cans and three-piece cans. A two-piece can is composed of two members: a bottomed cylindrical can body and a lid that closes an opening formed at one axial end of the can body. A three-piece can is composed of three members: a cylindrical can body, a top lid that closes an opening formed at one end of the can body, and a bottom lid that closes an opening formed at the opposite end of the can body.

The body member of such a three-piece can is often formed by cylinder forming and welding. A three-piece can requires a high technical level of welding because a thermoplastic resin film covering a laminated metal sheet is generally an insulator. For this reason, in the case of a three-piece can, a laminated metal sheet is often used as a bottom member or a lid member. In the case of a two-piece can, a laminated metal sheet is used also as a body member.

There are various methods for forming a body member of a two-piece can, such as Draw and Redraw (DRD), Draw and Ironing (DI), and Draw and Thin Redraw (DTR). All of these methods involve drawing and, as necessary, ironing. Therefore, laminated metal sheets are strongly required to have good workability.

Polyester films, primarily composed of PET (Polyethylene terephthalate), are frequently used as a thermoplastic resin film especially in a laminated metal sheet for use as a body member of a two-piece can.

In terms of the manner of stretching, polyester film production methods can be classified into non-stretching, longitudinal uniaxial stretching, transverse uniaxial stretching, sequential biaxial stretching, simultaneous biaxial stretching, and multi-stage stretching including longitudinal re-stretching.

An advantage of the non-stretching method is the use of less expensive equipment as compared to other stretching methods. The non-stretching method is disadvantageous in that it is inferior to other stretching methods in terms of productivity and the precision of the thickness of a polyester film produced.

An advantage of the longitudinal uniaxial stretching is the use of less expensive equipment as compared to other stretching methods. The longitudinal uniaxial stretching is disadvantageous in that anisotropy will occur due to uniaxial orientation when a laminated metal sheet is formed into a laminated metal container.

The transverse uniaxial stretching has no particular advantage in terms of a laminated metal container, while it is disadvantageous in that it uses more expensive equipment as compared to other stretching methods, and that anisotropy will occur due to uniaxial orientation when a laminated metal sheet is formed into a laminated metal container.

The sequential biaxial stretching is advantageous in that it is superior to other stretching methods in terms of productivity, the precision of the thickness of a polyester film produced, and the in-plane isotropy of a polyester film produced. A disadvantage of the sequential biaxial stretching is the use of expensive equipment as compared to other stretching methods.

An advantage of the simultaneous biaxial stretching is its superiority to other stretching methods in terms of the in-plane isotropy of a polyester film produced. A disadvantage of the simultaneous biaxial stretching is the use of very expensive equipment as compared to other stretching methods.

The multi-stage stretching such as longitudinal re-stretching has no particular advantage in terms of a laminated metal container. A disadvantage of the multi-stage stretching is the use of expensive equipment as compared to other stretching methods. In view of strengthening of the orientation of a polyester film, the multi-stage stretching is not suitable for a polyester film for a laminated metal container.

In consideration of the above advantages and disadvantages, many of thermoplastic resin films for use in laminated metal containers are produced by sequential biaxial stretching. However, sequential biaxial stretching requires a large-scale heating furnace for transverse stretching and heat setting.

Therefore, polyester films are also produced using a non-stretching method or longitudinal uniaxial stretching, which can reduce equipment costs and does not require a large-scale heating furnace. Polyester films produced using a non-stretching method are disclosed, for example, in Patent Literature 1. Polyester films produced using longitudinal uniaxial stretching are disclosed, for example, in Patent Literature 2.

Citation List

Patent Literature

PTL 1: International Publication No. WO 2015/012222
PTL 2: Japanese Unexamined Patent Application Publication (Translation of PCT Application) No. 2014-518781

Summary of Invention

Technical Problem

As described above, thermoplastic resin films are required to have a corrosion resistance, an adhesion to a metal sheet when they are formed into a laminated metal sheet, and a container formability when a laminated metal sheet is formed into a container. Non-stretched films and longitudinally uniaxially stretched films have been proposed as energy-saving polyester films that satisfy these requirements and do not require a large-scale heating furnace.

Patent Literature 1 only discloses in its working examples an extrusion coating method as a method for producing a non-stretched polyester film. The extrusion coating method involves subjecting a film, extruded from a T-die of an extruder, directly to thermocompression bonding to a metal sheet. Patent Literature 1 describes that if the extruded film is once wound up, and then laminated to a metal sheet, the process is inferior in terms of thinning of the film, productivity, and handling. As will be appreciated from such descriptions, it is actually difficult to industrially produce polyester films by a method other than the extrusion coating method.

In the extrusion coating method, laminating equipment and an extruder are operated in synchronization to produce a polyester film, and therefore the production rate of the polyester film is determined by the rate of extrusion from a T-die. The extrusion coating method thus has the drawback of poor productivity as compared to a method in which a film, extruded from a wide die or transversely stretched, is laminated after slitting. For the same reason, upon a change of resin type in the extrusion coating method, not only the extruder but the laminating equipment also needs to be stopped.

The laminated metal sheet described in Patent Literature 2 comprises a metal sheet and a longitudinally uniaxially stretched polyester film laminated to the metal sheet. The laminated metal sheet is produced by laminating the polyester film to the metal sheet which has been preheated, and then post-heating the laminated metal sheet. Thus, the laminated metal sheet production method described in Patent Literature 2 necessitates two heating steps and therefore requires a lot of energy for the production of the laminated metal sheet.

In the longitudinal uniaxial stretching method described in Patent Literature 2, the edges of a film must be trimmed before stretching the film. Patent Literature 2 also describes that the edges of the film, which has been longitudinally uniaxially stretched, may be trimmed as necessary. In view of the variation in film width due to longitudinal uniaxial stretching and of the yield, there is a high probability that the film will be trimmed after its longitudinal uniaxial stretching. Thus, the longitudinal uniaxial stretching method described in Patent Literature 2 necessitates two trimming steps, and there is a demand for energy saving in the production process.

The present invention has been made in view of the above problems. It is therefore an object of the present invention to provide a polyester film, a laminated metal sheet, and a laminated metal container, which can be produced stably in an energy-saving manner at any stage of their production. It is also an object of the present invention to provide a polyester film, etc. which has a sufficient corrosion resistance, for example after it is subjected to a process for forming a two-piece can or the like.

Solution to Problem

The present invention has the following features to solve the above problems.

[1] A polyester film containing a polyester comprising polyethylene terephthalate as a component,

wherein net intensities of pole figures, obtained by X-ray diffractometry and indicating a crystal orientation distribution, satisfy the following formulas (1) and (2):

[Math. 1]

$$0.30 \leq I_{100}^{(60,\ 0)} / I_{100}^{(60,\ 90)} \leq 0.63 \qquad (1)$$

$$0.42 \leq I_{1-10}^{(60,\ 0)} / I_{1-10}^{(60,\ 90)} \leq 0.60 \qquad (2)$$

wherein in X-ray diffraction measurement using a CuKα ray, a diffraction peak appearing at 2θ = 26.5 ± 1.0° is assigned to 100 diffraction, and a diffraction peak appearing at 2θ = 23.0 ± 0.5° is assigned to 1-10 diffraction, wherein the pole figures are measured at an elevation angle α = 0°, at which the bisector of incident X-ray and reflected X-ray is parallel to the film surface, wherein in the 100-diffraction pole figure, an in-plane rotation angle β, at which the maximum diffraction intensity is observed when α = 60°, is 90°, wherein $I_{100}^{(60,\ 0)}$ denotes the net intensity at α = 60° and β = 0° in the 100 diffraction-intensity pole figure, wherein $I_{100}^{(60,\ 90)}$ denotes the net intensity at α = 60° and β = 90° in the 100 diffraction-intensity pole figure, wherein $I_{1-10}^{(60,\ 0)}$ denotes the net intensity at α = 60° and β = 0° in the 1-10 diffraction-intensity pole figure, and wherein $I_{1-10}^{(60,\ 90)}$ denotes the net intensity at α = 60° and β = 90° in the 1-10 diffraction-intensity pole figure.

[2] The polyester film according to [1], wherein the sample standard deviation of thicknesses, measured in the direction of incident X-ray when β = 0° in the pole figures, is 10% or less of the average of the measured thicknesses.
[3] The polyester film according to [1] or [2], comprising:

a first layer containing a polyester comprising polyethylene terephthalate as a component; and
a second layer laminated to the first layer and containing a polyester comprising polyethylene terephthalate as a component, and a lubricant.

[4] The polyester film according to [3], wherein the first layer contains a pigment.
[5] A method for producing a polyester film containing a polyester comprising polyethylene terephthalate as a component, the method comprising:

a non-stretched film production step of extruding the polyester through a T-die using an extruder to obtain a non-stretched film; and
a longitudinally uniaxially stretched film production step of longitudinally stretching the non-stretched film using a longitudinally uniaxially stretching machine equipped with a preheating roll and a stretching roll to obtain a longitudinally uniaxially stretched film,
wherein the longitudinal stretching in the longitudinally uniaxially stretched film production step is carried out at a stretch ratio of not less than 3.3 and not more than 7.5, and at a final preheating roll temperature of not less than 75°C and not more than 110°C.

[6] A laminated metal sheet comprising: a metal sheet having a front surface and a back surface; and the polyester film according to any one of [1] to [4], bonded to at least one of the front surface and the back surface.
[7] The laminated metal sheet according to [6], wherein a wide-angle X-ray diffraction spectrum satisfies the following formula (3):
[Math. 2]

$$I_{100}^{(90,\ 0)} / I_{amorphous}^{(90,\ 0)} \leq 1.5 \qquad (3)$$

wherein the wide-angle X-ray diffraction spectrum is measured by a θ-2θ method using a CuKα ray at sample angles of α = 90° and β = 0° in the pole figures, wherein $I_{100}^{(90,\ 0)}$ denotes the net intensity of the 100-diffraction peak appearing at 2θ = 26.5 ± 1.0°, and wherein $I_{amorphous}^{(90,\ 0)}$ denotes the net intensity of an amorphous halo appearing at 2θ = 20.0 ± 5.0°.

[8] A method for producing the laminated metal sheet according to [6] or [7], comprising:

a thermocompression bonding step of subjecting a preheated metal sheet and the polyester film to thermocompression bonding using a laminating roll to produce a thermocompression bonded body; and

a water-cooling step of water-cooling the thermocompression bonded body within 7 seconds after the thermocompression bonding,

wherein in the thermocompression bonding step, the polyester film and the metal sheet are subjected to the thermocompression bonding after preheating to a temperature in the range from the melting point of the polyester film - 5°C to the melting point + 50°C.

[9] A laminated metal container comprising the laminated metal sheet according to [6] or [7] as a material.

Advantageous Effects of Invention

According to the present invention, a polyester film, a laminated metal sheet, and a laminated metal container can be produced stably in an energy-saving manner at any stage of their production. The polyester film, etc. of the present invention has a sufficient corrosion resistance, for example after it is subjected to a process for forming a two-piece can.

Brief Description of Drawings

[FIG. 1] FIG. 1 is an explanatory diagram of a laminated metal container.
[FIG. 2] FIG. 2 is a cross-sectional view of a polyester film composed of two layers.
[FIG. 3] FIG. 3 is a cross-sectional view of a polyester film composed of three layers.
[FIG. 4] FIG. 4 is a 100 diffraction-intensity pole figure of a polyester film.
[FIG. 5] FIG. 5 is a 1-10 diffraction-intensity pole figure of a polyester film.
[FIG. 6] FIG. 6 is a flow chart showing a method for producing a polyester film.
[FIG. 7] FIG. 7 is a flow chart showing a method for producing a laminated metal sheet.

Description of Embodiments

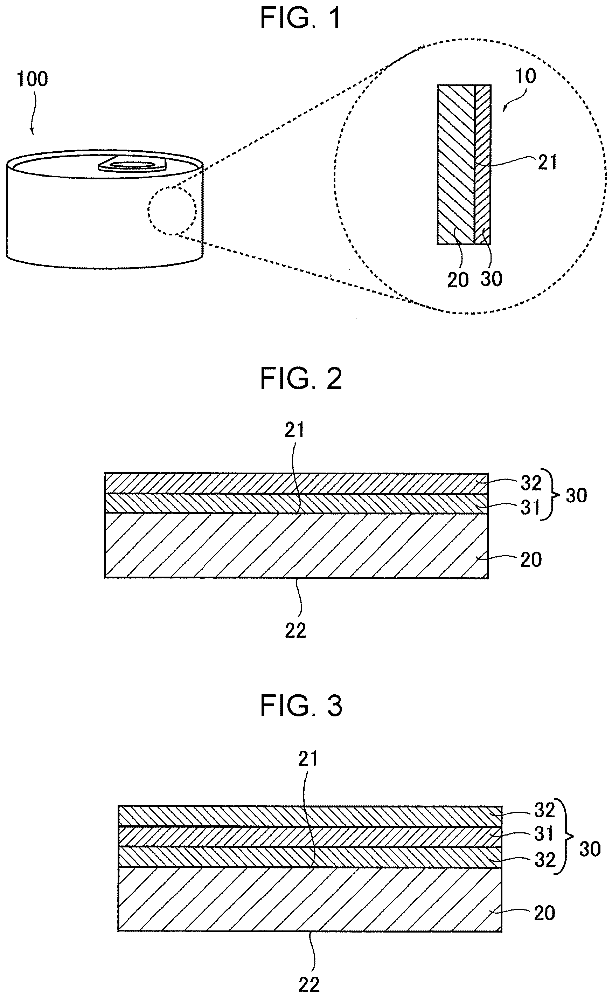

Embodiments of the present invention will now be described based on the drawings. FIG. 1 shows the construction of a laminated metal container. As shown in FIG. 1, the laminated metal container 100 is formed in the shape of a bottomed container, and has a lid that closes the container. The laminated metal container 100 is used, for example, as a food can, a beverage can, or an 18-liter can. An enlarged cross section of the wall portion of the laminated metal container 100 is shown on the right side of FIG. 1.

The laminated metal container 100 is not particularly limited, and may be either a three-piece can formed by joining three members: a lid member, a body member, and a bottom member, or a two-piece can formed by joining two members: a lid member and a body member. The laminated metal container 100 is not limited to a can; for example, an opening may be provided at one end of the body member.

As shown in the enlarged cross-sectional view of FIG. 1, the laminated metal container 100 includes a laminated metal sheet 10 as a material. The laminated metal sheet 10 includes a metal sheet 20 having a front surface 21, which is the outer surface of the laminated metal container 100, and a back surface 22 which is the inner surface of the laminated metal container 100. The laminated metal sheet 10 includes a polyester film 30 bonded to at least one of the front surface 21 and the back surface 22 of the metal sheet 20. In FIG. 1, the polyester film 30 is provided such that it covers the front surface 21 of the metal sheet 20.

The metal sheet 20 is not particularly limited, and, for example, aluminum sheets and steel sheets, which are widely used as materials for metal containers, and such metal sheets which have undergone various surface treatments can be used. It is particularly preferred to use a surface-treated steel sheet TFS (Tin Free Steel) having a coating of metallic chromium and a hydrated chromium oxide.

The steel sheet, constituting the steel substrate of the TFS, is not particularly limited as long as it can be formed into a shape corresponding to the laminated metal container 100, and may preferably be one obtained by recrystallization annealing of a low-carbon steel or an IF (Interstitial Free) steel, followed by rolling, such as temper rolling. The steel sheet, constituting the steel substrate of the TFS, may be one which has been subjected to an overaging treatment as necessary. The steel sheet, constituting the steel substrate of the TFS, may be one which has undergone secondary cold rolling.

The low-carbon steel may be, for example, one having a carbon content of not less than 0.010% by mass and not more than 0.100% by mass. The IF steel may be, for example, an ultralow-carbon steel having a carbon content of 0.003% by mass or less, to which Nb, Ti, or the like has been added. The recrystallization annealing is, for example, continuous annealing, tight annealing, or open annealing.

The mechanical properties of the steel sheet, constituting the steel substrate of the TFS, are not particularly limited as long as the steel sheet can be formed into a shape corresponding to the laminated metal container 100. For example, the yield point of the steel sheet is preferably in the range of 220 to 580 MPa, the Lankford value is preferably 0.8 or more, and the absolute value of the in-plane anisotropy of the Lankford value is preferably 0.7 or less. While the coating weights of the metallic chromium layer and the hydrated chromium oxide layer of the TFS are not particularly limited, from the viewpoint of film adhesion and corrosion resistance, the coating weight of the metallic chromium layer is preferably in the range of 50 to 200 mg/m$^2$, and the coating weight of the hydrated chromium oxide layer is preferably in the range of 3 to 30 mg/m$^2$, as calculated in terms of Cr.

While the thickness of the metal sheet is not particularly limited, it is preferably in the range of 0.10 to 0.60 mm from the viewpoint of formability into a laminated metal container and the strength of a metal container.

The polyester film 30 contains a polyester comprising polyethylene terephthalate as a component. The content of polyethylene terephthalate in the polyester film 30 is preferably 70% by mass or more, more preferably 80% by mass or more, and even more preferably 90% by mass or more.

The polyester can be polyethylene terephthalate or a copolymer of polyethylene terephthalate and a copolymerization component(s). When the polyester is a polyethylene terephthalate copolymer, the content of the copolymerization component(s) is preferably 20 mol % or less, more preferably 2 to 16 mol %.

Examples of the copolymerization component(s) of the polyester include, as acid components, aromatic dicarboxylic acids such as isophthalic acid, phthalic acid, naphthalenedicarboxylic acid, diphenyldicarboxylic acid, diphenyletherdicarboxylic acid, diphenylsulfonedicarboxylic acid, diphenoxyethanedicarboxylic acid, and 5-sodiumsulfoisophthalic acid; aliphatic dicarboxylic acids such as oxalic acid, succinic acid, adipic acid, suberic acid, sebacic acid, dimer acid, maleic acid, fumaric acid, dodecanedioic acid, and cyclohexanedicarboxylic acid; and ester derivatives thereof.

Examples of the copolymerization component(s) of the polyester include, as alcohol components, propanediol, butanediol, pentanediol, hexanediol, neopentyl glycol, cyclohexanedimethanol, diethylene glycol, triethylene glycol, polyalkylene glycol, 2,2-bis(4-hydroxyethoxyphenyl) propane, isosorbide(1,4:3,6-dianhydroglucitol, 1,4:3,6-dianhydro-D-sorbitol), spiroglycol, bisphenol A, and bisphenol S.

One, or two or more of the above-listed compounds may be used as the copolymerization component(s) of the polyester.

Isophthalic acid is preferably used as a copolymerization component from the viewpoint of formability of the polyester film 30 and adhesion of the film to the metal sheet. When isophthalic acid is used as a copolymerization component, the content of isophthalic acid in the copolymer is preferably 1 to 20 mol %, more preferably 2 to 16 mol %.

The intrinsic viscosity of the polyester is preferably in the range of 0.62 to 1.10 dL/g. When the intrinsic viscosity is less than 0.62 dL/g, the formability of the laminated metal sheet tends to decrease. When the intrinsic viscosity is higher than 1.10 dL/g, the energy consumption during the polymerization process and the extrusion process tends to be higher.

In addition to the polyester, the polyester film 30 may contain additives such as a lubricant, a pigment, a dye, an antioxidant, a crystal nucleating agent, a heat stabilizer, and an antistatic agent. In particular, the polyester film 30 preferably contains 0.01 to 1.00 mass % of a lubricant to improve handling of the film.

The lubricant is not particularly limited; it may be an inorganic lubricant such as silicon oxide, diatomaceous earth, or talc, or an organic lubricant such as PMMA, carnauba wax, polyolefin wax, or modified polyolefin wax.

The lubricant may be a combination of two or more inorganic and organic lubricants. The inclusion of an inorganic lubricant and an organic lubricant in the polyester film 30 can achieve the following effects: The inorganic lubricant can improve conveyance of the polyester film 30 and of the laminated metal sheet 10, and the organic lubricant can improve the formability into a two-piece can body member.

The pigment is not particularly limited and may be, for example, a white pigment or a yellow pigment. The inclusion of a pigment in the polyester film 30 can cover the metal sheet 20 as a substrate with the pigment, thereby enhancing the design quality and print sharpness.

Examples of usable white pigments include oxide ceramics such as aluminum oxide, titanium dioxide, and zinc oxide, and talc, calcium carbonate, and barium sulfate. In particular, as a white pigment, titanium dioxide is preferably used from the viewpoint of dispersibility and whiteness, and rutile titanium dioxide is more preferably used.

Isoindolinone yellow or disazo yellow, for example, can be used as the yellow pigment. Disazo yellow is preferably used as the yellow pigment from the viewpoint of heat resistance.

The polyester film 30 may contain an antioxidant in an amount of not less than 0.0001% by mass and not more than 1.0000% by mass. The antioxidant is not particularly limited; known antioxidants, classified as hindered phenols, hydrazines, phosphites, etc., can be used. The inclusion of an antioxidant in the polyester film 30 can improve the heat resistance of the film.

The polyester film 30 can be composed of a plurality of layers. FIG. 2 shows a cross-section of a polyester film 30 composed of two layers. As shown in FIG. 2, the polyester film 30 is composed of a first layer 31 disposed on the front surface 21 of the metal sheet 20, and a second layer 32 laminated to the first layer 31.

The first layer 31 contains a polyester comprising polyethylene terephthalate as a component, and a pigment. The second layer 32 contains a polyester comprising polyethylene terephthalate as a component, and a lubricant.

When the polyester film 30 is thus composed of a plurality of layers, it is preferred that the second layer 32, which is the outermost layer furthest from the laminated metal sheet 10, contain a lubricant. In the example of the polyester film 30, shown in FIG. 2, the first layer 31 may contain a lubricant in an amount of, for example, 0.02% by mass or less. The second layer 32 may contain a lubricant in an amount of, for example, 0.01 to 1.00% by mass.

The outermost layer of the polyester film 30 is preferably formed without addition of a pigment. The formation of the polyester film 30 in this way can avoid attachment of a pigment to the handler's hands, intrusion of a pigment into the contents, etc.

The polyester film 30 is not limited to a two-layer structure, and may be composed of three or more layers. FIG. 3 shows a cross-section of a polyester film 30 composed of three layers. As shown in FIG. 3, second layers 32 may be provided such that they sandwich the first layer 31 in the lamination direction of the polyester film 30.

When the polyester film 30 is thus constructed, an additive may be added to a layer which can benefit from the additive. A lubricant, for example, may be added to the second layer(s) 32 in an amount of 0.01 to 1.00 mass %. In this case, it is preferred that no lubricant be added to the first layer 31. By thus selectively adding a lubricant to the second layer(s) 32, the production costs can be reduced while maintaining the effect of the lubricant. It is preferred that the lubricant be contained in the outermost layer, and not in the other layer(s).

A pigment, for example, may be added to the first layer 31. In this case, it is preferred that no pigment be added to the second layer(s) 32. By thus selectively adding a pigment to the first layer 31, the production costs can be reduced while maintaining the effect of the pigment. Further, since the first layer 31 is covered by the outermost second layer 32, the pigment can be prevented from intruding into the contents and causing deterioration in hygiene.

The layers of the polyester film 30 can be laminated by a known method such as a co-extrusion method using a feed block or a multi-manifold, a method which involves bonding of films, or a lamination method which involves putting a molten resin directly on a film. The layers of the polyester film 30 are preferably laminated by a co-extrusion method from the viewpoints of productivity and energy saving.

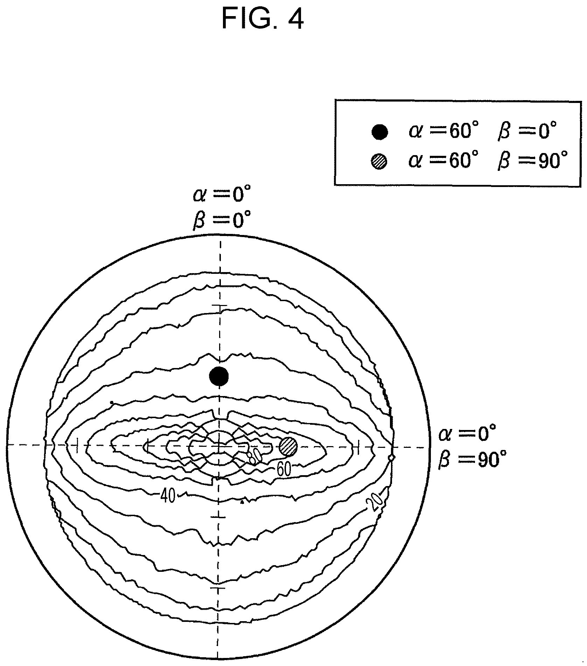

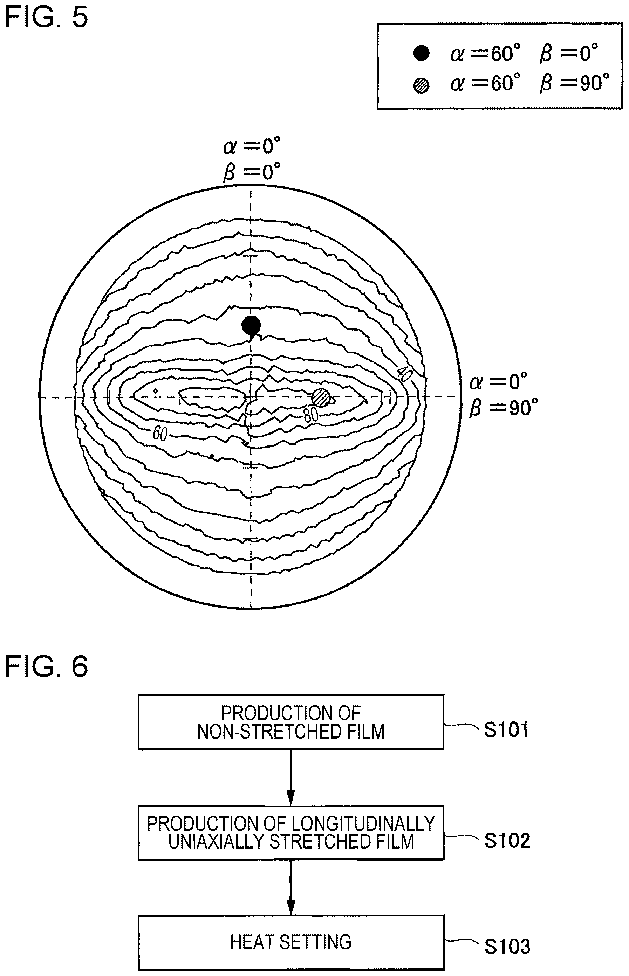

FIG. 4 is a 100 diffraction-intensity pole figure of the polyester film 30. FIG. 5 is a 1-10 diffraction-intensity pole figure of the polyester film 30. In FIGS. 4 and 5, the pole figures are obtained by X-ray diffractometry and each indicates a crystal orientation distribution. In FIGS. 4 and 5, 10 contour lines are shown, dividing the net intensity range from the minimum value to the maximum value into elevenths. The numbers marked on the contour lines shown in FIGS. 4 and 5 each represents a net intensity expressed as a percentage of the maximum value. In the polyester film 30, the net intensities of the pole figures shown in FIGS. 4 and 5 satisfy the following formulas (1) and (2):

[Math. 3]

$$0.30 \leq I_{100}^{(60,\ 0)}/I_{100}^{(60,\ 90)} \leq 0.63 \qquad (1)$$

$$0.42 \leq I_{1-10}^{(60,\ 0)}/I_{1-10}^{(60,\ 90)} \leq 0.60 \qquad (2)$$

In X-ray diffraction measurement using a CuKα ray, a diffraction peak appearing at $2\theta = 26.5 \pm 1.0°$ is assigned to 100 diffraction, and a diffraction peak appearing at $2\theta = 23.0 \pm 0.5°$ is assigned to 1-10 diffraction. The pole figures are measured at an elevation angle $\alpha = 0°$, at which the bisector of incident X-ray and reflected X-ray is parallel to the film surface. In the 100-diffraction pole figure, an in-plane rotation angle $\beta$, at which the maximum diffraction intensity is observed when $\alpha = 60°$, is 90°.

$I_{100}^{(60,0)}$ denotes the net intensity at $\alpha = 60°$ and $\beta = 0°$ in the pole figure of the 100-diffraction intensity. $I_{100}^{(60,0)}$ is shown as a black dot in FIG. 4.

$I_{100}^{(60,90)}$ denotes the net intensity at $\alpha = 60°$ and $\beta = 90°$ in the pole figure of the 100-diffraction intensity. $I_{100}^{(60,90)}$ is shown as a hatched dot in FIG. 4.

$I_{1-10}^{(60,0)}$ denotes the net intensity at $\alpha = 60°$ and $\beta = 0°$ in the pole figure of the 1-10-diffraction intensity. $I_{1-10}^{(60,0)}$ is shown as a black dot in FIG. 5.

$I_{1-10}^{(60,90)}$ denotes the net intensity at $\alpha = 60°$ and $\beta = 90°$ in the pole figure of the 1-10-diffraction intensity. $I_{1-10}^{(60,90)}$ is shown as a hatched dot in FIG. 5.

In the pole figures (FIGS. 4 and 5), the net intensity at a particular point refers to a diffraction intensity obtained by subtracting the diffraction intensity at a point with the lowest diffraction intensity at $\alpha = 15°$ from the diffraction intensity at the particular point.

$I_{100}^{(60,0)}$ and $I_{100}^{(60,90)}$ denote ratios at which the (100) plane of the polyethylene terephthalate of the polyester, i.e. the aromatic ring plane, faces in the directions of $\beta = 0°$ and 90°, respectively.

$T_{100}^{(60,0)}/I_{100}^{(60,90)}$ is not less than 0.30 and not more than 0.63, and preferably not less than 0.35 and not more than 0.50. By making $I_{100}^{(60,0)}/I_{100}^{(60,90)}$ not less than 0.30 and not more than 0.63, it becomes possible to enhance the uniformity of the thickness of the polyester film 30. Further, thermal shrinkage of the polyester film 30 in the width direction, which will occur upon lamination of the polyester film 30 to the metal sheet 20, can be reduced. In addition, the tension stability of the polyester film 30 in the longitudinal direction can be improved.

On the other hand, when $I_{100}^{(60, 0)}/I_{100}^{(60, 90)}$ is less than 0.30, the polyester film 30 is likely to shrink in the width direction of the metal sheet 20 upon lamination of the polyester film 30 to the metal sheet 20. Accordingly, the tension of the polyester film 30 tends to be unstable in the longitudinal direction of the metal sheet 20.

When $I_{100}^{(60, 0)}/I_{100}^{(60, 90)}$ is more than 0.63, the stretch ratio of the polyester film 30 is low. Therefore, the uniformity of the thickness of the polyester film 30 tends to be impaired.

$I_{1-10}^{(60, 0)}$ and $I_{1-10}^{(60, 90)}$ denote ratios at which the (1-10) plane of the polyethylene terephthalate of the polyester faces in the directions of $\beta = 0°$ and $90°$, respectively. $I_{1-10}^{(60, 0)}/I_{1-10}^{(60, 90)}$ is not less than 0.42 and not more than 0.60, and preferably not less than 0.45 and not more than 0.55. By making $I_{1-10}^{(60, 0)}/I_{1-10}^{(60, 90)}$ not less than 0.42 and not more than 0.60, it becomes possible to enhance the uniformity of the thickness of the polyester film 30. Further, thermal shrinkage of the polyester film 30 in the width direction of the metal sheet 20, which will occur upon lamination of the polyester film 30 to the metal sheet 20, can be reduced. This can prevent the tension of the polyester film 30 from being unstable in the longitudinal direction of the metal sheet 20.

When $I_{1-10}^{(60, 0)}/I_{1-10}^{(60, 90)}$ is less than 0.42, the polyester film 30 is likely to shrink in the width direction of the metal sheet 20 upon lamination of the polyester film 30 to the metal sheet 20. Further, the tension of the polyester film 30 tends to be unstable in the longitudinal direction of the metal sheet 20 upon lamination of the polyester film 30 to the metal sheet 20.

When $I_{1-10}^{(60, 0)}/I_{1-10}^{(60, 90)}$ is more than 0.60, the stretch ratio of the polyester film 30 is low, leading to reduced uniformity of the thickness of the polyester film 30.

In the polyester film of the present invention, the sample standard deviation of thicknesses, measured in the direction of incident X-ray when $\beta = 0°$ in the pole figures, is preferably 10% or less, more preferably 5% or less of the average of the measured thicknesses.

The thicknesses of the polyester film 30 may be measured at 1,000 points at 1-mm intervals over a length of 1,000 m in the direction of $\beta = 0°$ using a constant pressure thickness gauge, and the sample standard deviation and the average of the measured thicknesses are calculated.

The direction of $\beta = 0°$ corresponds to the stretching direction of the polyester film 30. When the sample standard deviation of the thicknesses of the polyester film 30 is 10% or less of the average of the thicknesses of the polyester film 30, it indicates that the polyester film 30 has been stretched to an elongation exceeding the range of necking.

Such control of the thickness of the polyester film 30 can impart stiffness to the polyester film 30, thereby improving handling of the polyester film 30. Further, the tension stability of the polyester film 30 in the longitudinal direction of the metal sheet 20 can be improved upon lamination of the polyester film 30 to the metal sheet 20.

In addition, the polyester film 30, or the polyester film 30 and the metal sheet 20 can be prevented from being broken when the laminated metal sheet 10 is formed into the laminated metal container 100.

The average thickness of the polyester film 30 may be 8 to 50 $\mu$m, preferably 10 to 30 $\mu$m.

When the average thickness of the polyester film 30 is less than 8 $\mu$m, the thickness of the polyester film 30 may be too small to ensure corrosion resistance when the laminated metal sheet 10 is formed into the laminated metal container 100.

Even when the average thickness of the polyester film 30 is made greater than 50 $\mu$m, it is difficult to further increase the effect of improving corrosion resistance and the effect of improving workability by the impartment of stiffness to the polyester film 30. When the average thickness of the polyester film 30 is made greater than 50 $\mu$m, it will be difficult to produce the polyester film 30 in an energy-saving manner.

(Polyester Film Production Method)

A method for producing the polyester film 30 will now be described. FIG. 6 shows a production flow for the polyester film 30. As shown in FIG. 6, in the polyester film 30 production method, a polyester is subjected to a non-stretched film production step (step S101) of extruding the polyester through a T-die using an extruder to obtain a non-stretched film. Subsequently, the non-stretched film is subjected to a longitudinally uniaxially stretched film production step (step S102) of longitudinally stretching the non-stretched film to obtain a longitudinally uniaxially stretched film. The longitudinally uniaxially stretched film is then subjected to a heat setting step (step S103) of heating the longitudinally uniaxially stretched film to heat-set the film, thereby producing the polyester film 30.

In the non-stretched film production step S101, the above-described polyester is an essential raw material. Additives, such as a lubricant, a pigment, a dye, an antioxidant, a crystal nucleating agent, a heat stabilizer, and an antistatic agent, may be added to the raw material.

These raw materials and a masterbatch, comprising a resin and an additive, such as a lubricant, dispersed in the resin, are mixed in the form of pellets or the like, for example by dry blending to produce a resin mixture. The resin mixture is dried with hot air or under vacuum, as necessary, and then fed to an extruder.

The polyester is heated to a temperature greater than or equal to its melting point, and thus is melted in the extruder. After foreign matter, a denatured resin, etc. are filtered off, the molten resin composition is fed to a T-die via a gear pump, and extruded through the T-die. The resin composition is formed into a sheet upon its extrusion through the T-die.

When the polyester film 30 is formed of a plurality of layers, the layers can be laminated together using, for example, a co-extrusion method to form the single polyester film 30. In that case, a feed block or a multi-manifold die can be used to melt-extrude resin compositions, which are to form the layers, using a plurality of extruders.

The molten resin composition, extruded from the T-die, is cooled and solidified by a cooling device such as a cast roll to form a non-stretched polyester film (hereinafter also referred to as a non-stretched film). Electrostatic pinning, a vacuum chamber, etc. are preferably used upon the cooling and solidification of the molten resin composition. The use of such equipment can increase adhesion between the cast roll and the resin composition, making it possible to obtain a homogeneous non-stretched film.

The longitudinally uniaxially stretched film production step S102 is performed by longitudinally stretching the non-stretched film using a longitudinally uniaxially stretching machine including a preheating roll(s) and a stretching roll. In particular, the non-stretched film is heated to a predetermined temperature when it passes the preheating roll(s). The preheating roll(s) preferably has a peripheral speed difference of less than 2% from a preceding roll.

The non-stretched film, which has been heated to the predetermined temperature by the preheating roll(s), is stretched in the longitudinal direction between the stretching roll and a final preheating roll immediately preceding the stretching roll. The peripheral speed difference between the stretching roll and the preceding roll is 50% or more.

Besides the preheating roll(s), an infrared heater may also be used to heat the non-stretched film. For example, an infrared heater may be installed between the stretching roll and the final preheating roll which is located nearest to the stretching roll among the preheating rolls. Heating the non-stretched film using the infrared heater enables a reduction in the temperature of the final preheating roll.

The reduction in the temperature of the final preheating roll can reduce sticking of the non-stretched film to the preheating roll(s). The longitudinal uniaxial stretching may be performed in multiple stages using a plurality of stretching rolls.

The stretch ratio in the longitudinal stretching is not less than 3.3 and not more than 7.5. The stretch ratio in the longitudinal stretching is preferably not less than 3.9 and not more than 6.5. The stretch ratio in the longitudinal stretching can be expressed as the ratio of the line speed on the exit side of the longitudinally stretching machine to that on the entry side of the machine.

When the stretch ratio is less than 3.3, $I_{1-10}^{(60,0)}/I_{1-10}^{(60,90)}$ can possibly be more than 0.60. When the stretch ratio is more than 7.5, $I_{1-10}^{(60,0)}/I_{1-10}^{(60,90)}$ can possibly be less than 0.42. Further, when the stretch ratio is more than 7.5, the film is likely to break during its stretching.

The longitudinally uniaxially stretched film production step is carried out at a final preheating roll temperature of not less than 75°C and not more than 110°C. The final preheating roll temperature is preferably not less than 80°C and not more than 105°C. When the final preheating roll temperature is less than 75°C, it is possible that the polyester film may be stretched at a temperature lower than the glass transition temperature. In that case, the film of the resin composition is likely to break during its stretching.

As the glass transition temperature of the polyester film 30 can be used, for example, a temperature at which a baseline shift in heat flux occurs when the temperature of the film is increased from -50°C to 280°C at a rate of 10°C/min in DSC.

When the temperature of the final preheating roll is higher than 110°C, the longitudinally uniaxially stretched film may stick to the roll, resulting in a reduction in the productivity. In addition, the precision of the thickness of the longitudinally uniaxially stretched film tends to be low.

The heat setting step S103 is a step that may be optionally performed. The heat setting is preferably performed by heating the polyester film 30 at a temperature which is at least 5°C higher than the final preheating roll temperature during stretching and at least 50°C lower than the melting point of the polyester film 30.

As the melting point of the polyester film 30 can be used, for example, the peak temperature of the highest endothermic peak as observed when the temperature of the film is increased from -50°C to 280°C at a rate of 10°C/min in differential scanning calorimetry (DSC).

The longitudinally uniaxially stretched film can also be heated using a roll which has been heated similarly to the preheating during the longitudinal stretching. In that case, it is preferred to preheat the roll to a temperature which is at least 5°C higher than the final preheating roll temperature during stretching and which is lower than 150°C. This can reduce sticking of the longitudinally uniaxially stretched film to the roll.

During the heat setting, the longitudinally uniaxially stretched film may be relaxed in the longitudinal direction. The relaxation rate of the longitudinally uniaxially stretched film is preferably not less than 0.5% and not more than 5%. While the relaxation of the longitudinally uniaxially stretched film may be performed using a pair of rolls having different peripheral speeds, it is preferably performed in multiple stages using multiple pairs of rolls.

By performing the heat setting step S103, residual stress caused by stretching can be alleviated and stiffness can be imparted to the longitudinally uniaxially stretched film through thermal crystallization.

The edges of the longitudinally uniaxially stretched film are preferably trimmed to a predetermined width. The trimming may be performed after the heat setting step S103 if the step is performed. The trimming may be performed optionally.

The trimmed longitudinally uniaxially stretched film is coiled into a roll and stored before being used as a polyester film. The trimming of the edges of the longitudinally stretched film can keep the width-direction thickness of the film to a desired one. This can suppress wrinkling and telescoping of the longitudinally stretched film.

The polyester film can be produced stably by performing the longitudinally uniaxially stretched film production step S102 at the above-described stretch ratio and at the above-described final preheating roll temperature. As a result, desired film dimensions can be achieved even without performing the step of trimming the edges of the film between the non-stretched film production step S101 and the longitudinally uniaxially stretched film production step S102.

(Laminated Metal Sheet Production Method)

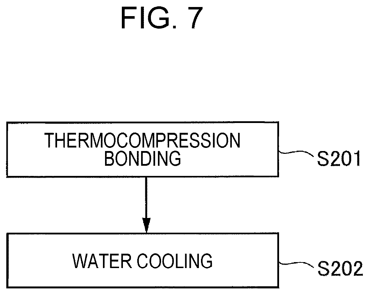

A method for producing the laminated metal sheet 10 will now be described. FIG. 7 shows a production flow for the laminated metal sheet 10. As shown in FIG. 7, the metal sheet 20 and the polyester film 30 are thermocompression-bonded using laminating rolls as laminating equipment to produce a thermocompression bonded body (step S201).

In the thermocompression bonding step S201, the polyester film 30 is laminated onto at least one of the front surface 21 and the back surface 22 of the metal sheet 20. The metal sheet 20 has been cast and rolled to a predetermined thickness and width, and then optionally subjected to annealing, temper rolling, and surface treatment such as plating.

The thermocompression bonding step S201 is performed by placing the polyester film 30 between the metal sheet 20, which has been preheated to a predetermined temperature, and one of laminating rolls, and pressing the polyester film 30 against the metal sheet 20 with the laminating rolls. During this process, the polyester film 30 is melted by the heat of the metal sheet 20 and pressure-bonded to the metal sheet 20.

The preheating of the metal sheet 20 is performed at a temperature in the range from the melting point of the polyester film 30 - 5°C to the melting point + 50°C. The preheating of the metal sheet 20 is preferably performed at a temperature in the range from the melting point of the polyester film 30 to the melting point + 30°C.

When the preheating of the metal sheet 20 is performed at a temperature lower than the melting point of the polyester film 30 - 5°C, it is possible that the polyester film 30 may not melt and may not be able to be bonded to the metal sheet 20. When the preheating of the metal sheet 20 is performed at a temperature higher than the melting point of the polyester film 30 + 50°C, it is possible that the polyester film 30 in contact with the laminating roll may melt and deteriorate the appearance. In addition, the polyester film 30 may adhere to the laminating roll, resulting in a reduction in the productivity.

The polyester film 30 for use in the thermocompression bonding step S201 may be a preheated one. The heating temperature of the polyester film 30 may preferably be 150°C or lower. By heating the polyester film 30 in such a temperature range, the polyester film 30 can be conveyed smoothly and, in addition, the preheating temperature of the metal sheet 20 can be reduced.

The pressure applied by the laminating rolls is preferably 0.35 to 1.50 MPa. By making the pressure of the laminating rolls not less than 0.35 MPa, air bubbles trapped at the interface between the metal sheet 20 and the polyester film 30 can be more effectively removed, thereby enhancing adhesion between the metal sheet 20 and the polyester film 30. Furthermore, the removal of the air bubbles can prevent the appearance of the laminated metal sheet 10 from being impaired.

By making the pressure of the laminating rolls not more than 1.50 MPa, excessive heat transfer from the metal sheet 20 to the laminating rolls can be prevented. This makes it possible to efficiently reduce the consumption of energy during the production process. Further, wear of the laminating rolls can be reduced under such conditions.

The laminating rolls are preferably heated to a temperature in the range from the glass transition temperature of the polyester film 30 - 30°C to the glass transition temperature + 40°C. The heating of the laminating rolls can reduce a spontaneous temperature increase due to heat input from the metal sheet, thereby controlling the amount of crystals on the surface of the polyester film 30.

The thermocompression bonded body, that is, the laminated metal sheet after the thermocompression bonding, is water-cooled within 7 seconds after the thermocompression bonding in step 201 (step S202). The water-cooling step S202 is performed by spraying water onto the thermocompression bonded body or by immersing the thermocompression bonded body in water.

The cooling water used in the water-cooling step S202 may be heated to ensure operational stability. The temperature of the cooling water is preferably not higher than the glass transition temperature of the polyester film 30 + 40°C. Water for use in the water-cooling is not limited to water; for example, an oil bath oil such as a silicone oil may be used.

After the water-cooling, the cooling water is removed from the thermocompression bonded body by squeeze rolls. The thermocompression bonded body is subjected to a post-heating treatment and an oiling treatment as necessary.

The thermocompression bonded body is inspected for surface defects, internal defects, thickness, etc., and then coiled by, for example, a tension reel. The thermocompression bonded body may be formed into a sheet-like product through slitting or shearing.

In the laminated metal sheet 10 thus produced, a wide-angle X-ray diffraction spectrum preferably satisfies the following formula (3):

[Math. 4]

$$I_{100}{}^{(90,\ 0)}/I_{amorphous}{}^{(90,\ 0)} \le 1.5 \qquad (3)$$

The wide-angle X-ray diffraction spectrum is measured by a $\theta$-$2\theta$ method using a CuK$\alpha$ ray at sample angles of $\alpha$ = 90° and $\beta$ = 0° in the pole figures. $I_{100}{}^{(90,\ 0)}$ denotes the net intensity of the 100-diffraction peak appearing at $2\theta$ = 26.5 $\pm$ 1.0°. $I_{amorphous}{}^{(90,\ 0)}$ denotes the net intensity of an amorphous halo appearing at $2\theta$ = 20.0 $\pm$ 5.0°.

When no clear peak appears at $2\theta$ = 26.5 $\pm$ 1.0°, the maximum net intensity in the range of $2\theta$ = 25.5 to 27.5° is denoted by $I_{100}{}^{(90,\ 0)}$. The net intensity of a wide-angle X-ray diffraction spectrum is a diffraction intensity obtained by subtracting a background intensity, indicated by the straight line connecting the diffraction intensity at $2\theta$ = 10.0° and the diffraction intensity at $2\theta$ = 30.0°, from the diffraction intensity at each $2\theta$.

$I_{100}{}^{(90,\ 0)}/I_{amorphous}{}^{(90,\ 0)}$ is preferably 1.5 or less, more preferably 1.3 or less. When the wide-angle X-ray diffraction spectrum of the laminated metal sheet 10 satisfies formula (3), oriented crystals, formed by stretching, become amorphous due to the heat applied during lamination, resulting in an improvement in the formability of the polyester film 30. This can prevent breakage of the polyester film upon forming into the laminated metal container 100 and can reduce deterioration of the corrosion resistance of the polyester film. By producing the laminated metal sheet 10 in the above-described manner, the laminated metal container 100 can be produced more stably in an energy-saving manner.

If the thermocompression bonded body is air-cooled without performing the water-cooling step S202, thermal crystallization of the polyester film 30 will progress. This makes it difficult to control the wide-angle X-ray diffraction spectrum of the laminated metal sheet 10 within the specified range according to the present invention.

In the water-cooling step S202, water-cooling needs to be performed within 7 seconds after the thermocompression bonding, preferably within 3 seconds after the thermocompression bonding. By performing the water-cooling in this manner, the progress of thermal crystallization of the polyester film can be retarded, so that the wide-angle X-ray diffraction spectrum of the laminated metal sheet 10 can be controlled to satisfy the above formula (3).

As described above, by performing the thermocompression bonding step S201 by the above-described thermocompression bonding lamination method, it is possible to enhance adhesion between the polyester film 30 and the metal sheet 20 and produce the laminated metal sheet 10 in an energy-saving manner. In particular, it is possible to satisfy performance requirements, such as adhesion between the polyester film 30 and the metal sheet 20 upon their forming into the laminated metal sheet 10, corrosion resistance, and container formability upon forming of the laminated metal sheet 10 into a container.

The laminated metal sheet 10, in which the polyester film 30 has been laminated to the metal sheet 20 such that its wide-angle X-ray diffraction spectrum has the above-described diffraction intensity distribution, can improve the workability of the resin layer. This makes it possible to form the laminated metal sheet 10 into the laminated metal container 100 stably in an energy-saving manner. Thus, the laminated metal sheet 10 can more advantageously be used for the laminated metal container 100.

Laminating equipment for performing the thermocompression bonding step S201 may be provided posterior to a continuous annealing line, a plating line, etc. The provision of the laminating equipment in such a location can increase the productivity. The laminating equipment may be composed of a minimum set of equipment including a payoff reel, a tension reel, and a laminating unit.

A thermoplastic resin film different from the polyester film 30 may be provided on the back surface 22 of the metal sheet 20, or painting or the like may be performed on the back surface 22. When a thermoplastic resin film different from the polyester film 30 is provided on the back surface 22 of the metal sheet 20, the resin film can be provided at any time; for example, the resin film can be provided by lamination at the same time as the lamination of the polyester film 30.

The polyester film 30 may be provided on the metal sheet 20 via an adhesive (not shown). The provision of the polyester film 30 via an adhesive can reduce the thermocompression bonding temperature and enhance adhesion between the polyester film 30 and the metal sheet 20.

Examples of the adhesive include a polyester resin, an alkyd resin, an epoxy resin, an acrylic resin, a phenolic resin, a polyurethane resin, a polyamine resin, a polyamidoamine resin, and a polyamide resin. These resins can be used alone or in combination of two or more. An additive(s) may be added to the adhesive as necessary.

(Laminated Metal Container Production Method)

The laminated metal container 100 is formed by using the laminated metal sheet 10 as at least one of the members constituting the laminated metal container 100. As described above, the laminated metal container 100 is, for example, a three-piece can composed of three members or a two-piece can composed of two members.

The body of a two-piece can, for example, can be formed by a variety of forming methods, such as Draw and Redraw (DRD), Draw and Ironing (DI), and Draw and Thin Redraw (DTR).

The DI and the DTR are forming methods which involve ironing, and therefore particularly require workability. The laminated metal sheet 10 has high formability even when used in such a forming method that requires workability, and therefore can advantageously be used in any of the above-described forming methods.

The laminated metal container 100 may be painted or printed. The forming of the laminated metal sheet 10 into the laminated metal container 100 is performed by a known method. For example, the laminated metal container 100 can be formed using a can making machine.

The laminated metal container 100 can advantageously be used particularly as a container which is to be subjected to a retort sterilization treatment.

The above-described embodiment has been described to illustrate an example in which the laminated metal sheet 10 includes the metal sheet 20 having the front surface 21 and the back surface 22, which are to constitute the outer surface and the inner surface, respectively, of the laminated metal container 100. The laminated metal sheet 10 can be configured arbitrarily depending on the embodiment. For example, the front surface 21 and the back surface 22 of the metal sheet 20 may be configured as the inner surface and the outer surface, respectively, of the laminated metal container 100. In that case, the polyester film 30 may be provided only on the front surface 21 which is to constitute the inner surface of the laminated metal container 100.

EXAMPLES

The following examples illustrate the present invention in greater detail. It should be noted that the present invention is not limited to the examples. Polyester films of Examples 1 to 6 and Comparative Examples 1 to 4 were produced.

(Example 1)

Pellets of a polyethylene terephthalate (PET) copolymer and pellets of a lubricant masterbatch were prepared as raw resins for a polyester film.

The polyethylene terephthalate (PET) copolymer comprises 5 mol % of isophthalic acid and 2 mol % of diethylene glycol as copolymerization components, and has a melting point of 245°C.

Silicon dioxide was used as an inorganic lubricant in the lubricant masterbatch pellets. In the lubricant masterbatch pellets, the lubricant is dispersed in PET having a melting point of 254°C.

The two types of raw resin pellets were blended such that the amount of silicon dioxide was 0.04% by mass of the entire resin mixture. Thereafter, in order to remove moisture from the pellets, the mixture was dried by heating it to 150°C under vacuum and holding it for 3 hours. The dried pellets were then put into a single-screw extruder and melt-kneaded at 275°C.

After removing foreign matter through a 25 μm-cut sintered filter, the melt was extruded from a T-die, and cooled and solidified on a cast roll, whose surface temperature was controlled at 30°C, to obtain a non-stretched film.

Subsequently, the film was preheated using a ceramic roll heated to 90°C, and the non-stretched film was stretched 5.0 times in the longitudinal direction in a single stage. Thereafter, the film was gradually cooled to room temperature without heat setting or relaxation in the stretching direction. The edges of the cooled film were trimmed, and the film was coiled on a winder to obtain a polyester film having a thickness of 18 μm.

(Examples 2 to 5)

Polyester films of Examples 2 to 5 were produced using varying PET copolymerization components, varying types and amounts of additives, varying longitudinal stretch ratios, and varying final preheating roll temperatures as shown in Table 1. Table 1 shows the PET copolymerization components, the types and amounts of additives, the longitudinal stretch ratios, and the final preheating roll temperatures for the polyester films of Examples 2 to 5. Examples 2 to 5 were performed in otherwise the same manner as in Example 1, and therefore a description thereof will be omitted. The copolymerization components shown in Table 1 are in mol %. In Examples 1 to 5 in which the polyester films are each composed of a single layer, the films are described as a first layer in Table 1.

(Example 6)

The polyester film of Example 6 is composed of three layers: a first layer and second layers disposed on both sides of the first layer. Pellets of copolymerized PET and pellets of a pigment masterbatch were prepared as raw resins for the first layer of the polyester film of Example 6. The copolymerized PET for the first layer comprises 2 mol % of isophthalic acid and 2 mol % of diethylene glycol. The pigment masterbatch comprises a PET having a melting point of 254°C, and rutile-type titanium dioxide as an inorganic pigment, dispersed in the PET.

Pellets of copolymerized PET and pellets of a lubricant masterbatch were prepared for the second layer. The copolymerized PET for the second layer comprises 2 mol % of isophthalic acid and 3 mol % of diethylene glycol. The lubricant masterbatch comprises a PET having a melting point of 254°C, and silicon dioxide as an inorganic lubricant, dispersed in the PET.

The raw materials for the first layer were blended such that the amount of titanium dioxide was 15% by mass of the first layer. The raw materials for the second layer were blended such that the amount of silicon dioxide was 0.04% by mass of the second layer.

Thereafter, the raw materials for the first layer and the raw materials for the second layer, which had been vacuum-dried, were put into different single-screw extruders and melt-kneaded. The melt-kneaded resin compositions were co-extruded by a feed block method to obtain a non-stretched film. The film was then longitudinally stretched in the same manner as in Example 1 except that the stretch ratio and the final preheating roll temperature were changed as shown in Table 1 to obtain the polyester film of Example 6.

(Comparative Examples 1 to 3)

Polyester films of Comparative Examples 1 to 3 were produced using varying PET copolymerization components, varying types and amounts of additives, varying longitudinal stretch ratios, and varying final preheating roll temperatures as shown in Table 1. Table 1 shows the PET copolymerization components, the types and the amounts of additives, the longitudinal stretch ratios, and the final preheating roll temperatures for the polyester films of Comparative Examples 1 to 3. Comparative Examples 1 to 3 were performed in otherwise the same manner as in Example 1, and therefore a description thereof will be omitted. The copolymerization components shown in Table 1 are in mol %.

(Comparative Example 4)

The polyester film of Comparative Example 4, like that of Example 6, is composed of three layers: a first layer and second layers disposed on both sides of the first layer. The polyester film of Comparative Example 4 differed from that of Example 6 only in the stretch ratio.

(Evaluation)

Pole figures were prepared for the polyester films of Examples 1 to 6 and Comparative Examples 1 to 4. Further, the thicknesses and the melting points of the polyester films were measured.

(Pole Figures)

Measured by the Schultz reflection method under the following conditions using a wide-angle goniometer RINT-2000, manufacture by Rigaku Corporation, and a multipurpose stage for poles.

X-ray source: CuK$\alpha$ ray, tube voltage: 40 kV, tube current: 50 mA, divergence slit: 0.5°, scattering slit: 4 mm, light-receiving slit: 3 mm, vertical divergence limiting slit: 1.2 mm, filter: CuK$\beta$-ray filter, $\alpha$: 15-90° (5°/step), $\beta$: 0-360° (5°/step continuous scan), $\beta$ scan rate: 360°/min

A sample was set at an elevation angle $\alpha = 0°$, at which the bisector of incident X-ray and reflected X-ray is parallel to the film surface, and at an in-plane rotation angle $\beta = 90°$, at which the maximum diffraction intensity is observed when $\alpha = 60°$ in the 100-diffraction pole figure.

From the wide-angle X-ray diffraction spectrum, measured by the $\theta$-$2\theta$ method while rotating the $\beta$ axis in the sample setting direction at $\alpha = 90°$, the diffraction peak appearing at $2\theta = 26.5°$ was assigned to 100 diffraction.

For 1-10 diffraction, no diffraction peak was observed at $2\theta = 23.0 \pm 0.5°$ in the $\theta$-$2\theta$ method. Therefore, the laminated metal sheet of Example 1 was heat-treated at 150°C for 15 minutes, and the wide-angle X-ray diffraction spectrum was measured again. The diffraction peak appearing at $2\theta = 23.0°$ was assigned to 1-10 diffraction. Further, measurements were performed for the other polyester films based on the diffraction angle $2\theta = 23.0°$ obtained in Example 1.

Therefore, pole figures were measured at $2\theta = 26.5°$ for 100 diffraction and at $2\theta = 23.0°$ for 1-10 diffraction. In the pole figures, the net intensity at a particular point refers to a diffraction intensity obtained by subtracting the diffraction intensity at a point with the lowest diffraction intensity at $\alpha = 15°$ from the diffraction intensity at the particular point.

With respect to the pole figures obtained, $I_{100}^{(60, 0)}$ denotes the net intensity at $\alpha = 60°$ and $\beta = 0°$ in the 100-diffraction pole figure. $I_{100}^{(60, 90)}$ denotes the net intensity at $\alpha = 60°$ and $\beta = 90°$ in the 100-diffraction pole figure. $I_{1-10}^{(60, 0)}$ denotes the net intensity at $\alpha = 60°$ and $\beta = 0°$ in the 1-10-diffraction pole figure. $I_{1-10}^{(60, 90)}$ denotes the net intensity at $\alpha = 60°$ and $\beta = 90°$ in the 1-10-diffraction pole figure. The following formulas (1) and (2) were verified.

[Math. 5]

$$0.30 \leq I_{100}^{(60, 0)} / I_{100}^{(60, 90)} \leq 0.63 \qquad (1)$$

$$0.42 \leq I_{1-10}^{(60, 0)} / I_{1-10}^{(60, 90)} \leq 0.60 \qquad (2)$$

(Measurement of the Thickness of Polyester Film)

The thickness of each polyester film was measured using a continuous thickness measuring instrument FT-A100, manufactured by Fujiwork Co., Ltd., equipped with an electric micrometer probe Millimar 1301 manufactured by Marl Japan Co., Ltd.

A 1,000-mm polyester film was sampled in the direction of $\beta = 0°$, and the thickness of the film sample was measured in 1,000 steps at 1 mm/step. The average thickness $\mu$ and the sample standard deviation $\sigma$ of the thicknesses $t_i$ (i = 1 to 1,000) obtained at the individual points were determined using the following formulas:

[Math. 6]

$$\mu = \frac{1}{1000} \sum_{i=1}^{1000} t_i$$

$$\sigma = \sqrt{\frac{1}{999} \sum_{i=1}^{1000} (t_i - \mu)^2}$$

(Measurement of Peak Melting Temperature of Polyester Film)

The thermal properties of each polyester film were measured using a differential scanning calorimeter DSC Q100 manufactured by TA Instruments Japan Inc. 5 mg of polyester film was sampled, cut into pieces, and placed in an aluminum dish. 1st-run measurement was performed while cooling the sample to -50°C in a nitrogen atmosphere, and then heating the sample to 290°C at 10°C/min. After holding the sample at 290°C for 5 minutes, the sample was rapidly cooled in liquid nitrogen. Thereafter, 2nd-run measurement was performed while heating the sample again from -50°C to 290°C at 10°C/min. The 1st-run endothermic peak, excluding the enthalpy relaxation peak appearing near the glass transition temperature, was identified as the melting point.

The evaluation results obtained for the polyester films of Examples 1 to 6 and Comparative Examples 1 to 4 are shown in Table 1. The 100 diffraction-intensity pole figure of the polyester film of Example 1 is shown in FIG. 4, and the 1-10 diffraction-intensity pole figure of the film is shown in FIG. 5.

[Table 1]

| | First layer | | Second layer | | Longitudinal stretching | | Pole figure | | Film thickness | | Melting point of polyester film (°C) |
|---|---|---|---|---|---|---|---|---|---|---|---|
| | Copolymerization component (amount: mol %) | Additive (amount: mass %) | Copolymerization component (amount: mol %) | Additive (amount: mass %) | Stretch ratio | Final preheating temp. (°C) | $I_{100}^{(60,0)}/I_{100}^{(60,90)}$ | $I_{1\text{-}10}^{(60,0)}/I_{1\text{-}10}^{(60,90)}$ | Average ($\mu$m) | Sample standard deviation ($\mu$m) | |
| Ex. 1 | IA: 5%, DEG: 2% | SiO$_2$: 0.04% | | | 5.0 | 90 | 0.46 | 0.49 | 19.0 | 0.6 | 243 |
| Ex. 2 | IA: 5%, DEG: 2% | SiO$_2$: 0.04% | | | 5.0 | 90 | 0.46 | 0.49 | 19.0 | 0.6 | 243 |
| Ex. 3 | IA: 5%, DEG: 2% | SiO$_2$: 0.04% | | | 7.0 | 95 | 0.34 | 0.42 | 12.3 | 0.8 | 243 |
| Ex. 4 | IA: 12%, DEG: 3% | SiO$_2$: 0.04% | | | 3.5 | 85 | 0.62 | 0.58 | 24.1 | 1.2 | 225 |
| Ex. 5 | IA: 2%, DEG: 2% | SiO$_2$: 0.04% WAX: 0.20% | | | 4.5 | 90 | 0.50 | 0.57 | 16.1 | 0.5 | 247 |
| Ex. 6 | IA:2%, DEG: 2% | TiO$_2$: 15% | IA: 2%, DEG: 3% | SiO$_2$: 0.04% | 4.5 | 90 | 0.46 | 0.48 | 19.6 | 0.7 | 247 |
| Comp. Ex. 1 | IA: 5%, DEG: 2% | SiO$_2$: 0.04% | | | 4.5 | 95 | 0.49 | 0.52 | 19.0 | 0.6 | 243 |
| Comp. Ex. 2 | IA: 5%, DEG: 2% | SiO$_2$: 0.04% | | | 3.0 | 95 | 0.66 | 0.61 | 32.2 | 3.5 | 243 |
| Comp. Ex. 3 | IA: 5%, DEG: 2% | SiO$_2$: 0.04% | | | 9.0 | 90 | 0.29 | 0.41 | 9.5 | 0.7 | 243 |
| Comp. Ex. 4 | IA: 2%, DEG: 2% | TiO$_2$: 15% | IA: 2%, DEG: 3% | SiO$_2$: 0.04% | 3.0 | 90 | 0.64 | 0.60 | 29.4 | 3.1 | 247 |

IA: isophthalic acid
DEG: diethylene glycol
WAX: acid-modified polyethylene wax

(Evaluation Results for Polyester Films)

In Comparative Example 3, the stretch ratio during the longitudinal stretching step in the production of the polyester film was too high and breakage of the film occurred, resulting in a failure to stably take samples. In contrast, polyester films could be stably produced in Examples 1 to 6 and Comparative Examples 1, 2, and 4. However, in Comparative Examples 2 and 4, the stretch ratio was too low, so that $I_{100(60, 0)}/I_{100}^{(60, 90)}$ and $I_{1-10(60, 0)}/I_{1-10}^{(60, 90)}$ were more than the upper limits of formulas (1) and (2). In Comparative Examples 2 and 4, the sample standard deviation of the film thicknesses was not less than 10% of the average thickness.

In contrast, films could be produced stably in Examples 1 to 6 and Comparative Example 1. It was confirmed that in Examples 1 to 6 and Comparative Example 1, the films could be produced stably without causing the above-described problems.

(Production of Laminated Metal Sheets)

Laminated metal sheets were produced using the polyester films of Examples 1 to 6 and Comparative Examples 1 to 4.

A TFS was used as a metal sheet. A low-carbon steel having a temper of T3CA and a thickness of 0.22 mm, which had been subjected to cold rolling, annealing, and temper rolling, was used as the steel substrate of the TFS. The steel substrate of the TFS had undergone degreasing, pickling, and chromium plating. The coating weight of the coating of the TFS, calculated in terms of Cr, was as follows: metal chromium layer 120 mg/m$^2$, and hydrated chromium oxide layer 10 mg/m$^2$.

(Lamination onto Metal Sheet by Thermocompression Bonding Lamination Method)

Each of the polyester films of Examples 1 to 6 and Comparative Examples 1 to 4 was provided on the back surface of the metal sheet by a thermocompression bonding lamination method. A biaxially oriented PET film having a melting point of 248°C and a thickness of 20 $\mu$m was provided on the front surface. The pressure applied by laminating rolls was 0.60 MPa. The temperature of the laminating rolls was 80°C.

A pair of laminating rolls were disposed such that they nip the front and back surfaces of the metal sheet. Each of the polyester films of Examples 1 to 6 and Comparative Examples 1 to 4 was placed between the metal sheet and the laminating rolls, and the metal sheet was passed between the laminating rolls. The metal sheet was water-cooled one second after it was pressed by the laminating rolls, thereby obtaining a laminated metal sheet with the polyester films bonded to both sides of the metal sheet.

During the thermocompression bonding lamination of the film to the metal sheet, the lamination entry-side sheet temperature was 240°C. Laminated metal sheets using the polyester films of Examples 2 to 6 and Comparative Examples 1 to 4 were each produced in the same manner as the laminated metal sheet using the polyester film of Example 1 except that the lamination entry-side sheet temperature was changed as shown in Table 2.

Wide-angle X-ray diffraction spectra were measured for the laminated metal sheets obtained using the polyester films of Examples 1 to 6 and Comparative Examples 1 to 4.

(Wide-Angle X-Ray Diffraction Spectra of Laminated Metal Sheets)

Measured by the $\theta$-$2\theta$ method under the following conditions using a wide-angle goniometer SmartLab, manufactured by Rigaku Corporation.

X-ray source: CuK$\alpha$ ray, tube voltage: 40 kV, tube current: 40 mA, incident slit: 0.5°, incident parallel slit: 5.0°, light-receiving slit: 0.6 mm, light-receiving parallel slit: 5.0°, monochromator slit: BBM, length limiting slit: 10.0 mm $2\theta$ = 10 to 30° (0.1°/step), counting time: 8 sec/step

Each sample was set and measured in the same direction as $\alpha = 90°$ and $\beta = 0°$ in the pole figure. The net intensity of the resulting wide-angle X-ray diffraction spectrum was determined by subtracting a background intensity, indicated by the straight line connecting the diffraction intensity at $2\theta = 10.0°$ and the diffraction intensity at $2\theta = 30.0°$, from the diffraction intensity at each $2\theta$. A peak appearing at $2\theta = 26.5°$ in the net intensity spectrum was assigned to 100 diffraction, and its intensity was denoted by $I_{100}^{(90, 0)}$.

When no clear peak appeared at $2\theta = 26.5 \pm 1.0°$, the maximum intensity in the range of $2\theta = 25.5$ to 27.5° was denoted by $I_{100}^{(90, 0)}$. The intensity of an amorphous halo appearing at $2\theta = 20.4°$ in the net intensity spectrum was denoted by $I_{amorphous}^{(90, 0)}$, and the following formula (3) was verified:
[Math. 7]

$$I_{100}(90, 0) / I_{amorphous}(90, 0) \leq 1.5 \qquad (3)$$

Primary adhesion, adhesion after retort sterilization, and appearance after retort sterilization were evaluated for the laminated metal sheets obtained using the polyester films of Examples 1 to 6 and Comparative Examples 1 to 4. Further, laminated metal containers were formed using these laminated metal sheets, and the formability of each laminated metal sheet was evaluated by measuring the extent of defects in the film.

(Primary Adhesion)

A sample, having a size of 120 mm in the conveying direction and 15 mm in the width direction, was cut from each of the laminated metal sheets obtained using the polyester films of Examples 1 to 6 and Comparative Examples 1 to 4. A portion of the polyester film was peeled from a long-side end of the cut sample. The peeled polyester film was opened in the opposite direction to the peeling direction (angle: 180°), and a peel test was performed using a tensile tester at a tensile speed of 30 mm/min. The adhesion strength per 15-mm width was evaluated according to the following criteria.

◎: 15.0 N/15 mm or more
○: not less than 10.0 N/15 mm and less than 15.0 N/15 mm
△: not less than 5.0 N/15 mm and less than 10.0 N/15 mm
×: less than 5.0 N/15 mm

(Adhesion after Retort Sterilization)

A sample, having a size of 100 mm in the conveying direction and 30 mm in the width direction, was cut from each of the laminated metal sheets obtained using the polyester films of Examples 1 to 6 and Comparative Examples 1 to 4. A portion of the film was peeled from a long-side end of the cut sample. The peeled film was opened in the opposite direction to the peeling direction (angle: 180°), and a 100-g weight was fixed to it. Retort sterilization was performed for 25 minutes under pressurized steam at 125°C. The peel length of the film after retort sterilization was measured, and evaluated according to the following criteria.

◎: less than 2 mm
○: not less than 2 mm and less than 5 mm
△: not less than 5 mm and less than 10 mm
×: 10 mm or more

(Formability of Laminated Metal Sheets)

A paraffin wax was applied to each of the laminated metal sheets obtained using the polyester films of Examples 1 to 6 and Comparative Examples 1 to 4, and the metal sheet was then punched into a disk having a diameter of 123. The disk was subjected to draw forming such that the film to be evaluated was positioned on the inner side, thereby obtaining a shallow-drawn metal container having an inner diameter of 71 and a height of 36 mm.

The shallow-drawn can was loaded into a DI forming machine and subjected to a forming process, consisting of redrawing and three-step ironing, at a punch speed of 200 mm/s, a stroke of 560 mm, and a total reduction rate of 50%. Finally, a laminated metal container having a can inner diameter of 52 mm and a can height of 90 mm was obtained. During the DI forming, tap water was circulated at a temperature of 50°C. After the production of the can, a 1% aqueous NaCl solution was poured into the can to fill it to a height of 60 mm. Thereafter, a voltage of 6 V was applied between the can body and the electrolyte to measure a current value called enamel rater value (ERV). The formability of the laminated metal sheet was evaluated according to the following criteria. Thus, the formability of the laminated metal sheet was evaluated by the soundness of the film after forming, as measured by the ERV test.

◎: less than 0.01 mA
○: not less than 0.01 mA and less than 0.1 mA
△: not less than 0.1 mA and less than 1 mA
×: 1 mA or more

Table 2 shows the evaluation results for the laminated metal sheets and the laminated metal containers, obtained using the polyester films of Examples 1 to 6 and Comparative Examples 1 to 4 above.

[Table 2]

| | Lamination entry-side sheet temp. (°C) | $I_{100}^{(90,0)}/I_{amorphous}^{(90,0)}$ | Primary adhesion | Adhesion upon retort sterilization | Formability |
|---|---|---|---|---|---|
| Example 1 | 252 | 0.7 | ◎ | ◎ | ◎ |
| Example 2 | 240 | 1.3 | ◎ | ○ | ○ |
| Example 3 | 252 | 0.7 | ◎ | ◎ | ◎ |
| Example 4 | 220 | 1.3 | ◎ | ○ | ○ |
| Example 5 | 252 | 0.8 | ◎ | ◎ | ◎ |
| Example 6 | 252 | 0.8 | ◎ | ◎ | ○ |
| Comp. Example 1 | 235 | 13.2 | × | × | × |
| Comp. Example 2 | 252 | 0.6 | ◎ | ◎ | △ |
| Comp. Example 3 | 242 | 1.6 | ○ | × | × |
| Comp. Example 4 | 252 | 0.7 | ◎ | ◎ | △ |

(Evaluation Results for Laminated Metal Sheets)

In Comparative Example 1, the lamination entry-side sheet temperature was low, resulting in $I_{100}^{(90,0)}/I_{amorphous}^{(90,0)}$ exceeding the upper limit of formula (3). In Comparative Example 1, no good results were obtained with respect to primary adhesion and adhesion upon retort sterilization.

The polyester films of Comparative Examples 2 and 4 had a significant variation in their thickness. Therefore, in Comparative Examples 2 and 4, no good results were obtained with respect to the formability of the laminated metal sheet.

In Comparative Example 3, the stretch ratio of the polyester film was too high. Therefore, in the polyester film of Comparative Example 3, $I_{100(60,0)}/I_{100}^{(61,90)}$ and $I_{1-10(60,0)}/I_{1-10}^{(60,90)}$ were lower than the lower limits of formulas (1) and (2). In Comparative Example 3, the polyester film was oriented excessively. Accordingly, in the laminated metal sheet, $I_{100}^{(90,0)}/I_{amorphous}^{(90,0)}$ was higher than the upper limit of formula (3). Therefore, in Comparative Example 3, no good results were obtained with respect to adhesion upon retort sterilization and the formability of the laminated metal sheet.

In Examples 1 to 6, good results were obtained in evaluations of primary adhesion, adhesion upon retort sterilization, and the formability of the laminated metal sheets. Further, in Examples 1 to 6, the laminated metal sheets and the laminated metal containers could be stably produced at any stage of their production.

The experimental results thus indicate that the polyester films of Examples 1 to 6 as well as the laminated metal sheets satisfy performance requirements, and that they can be produced stably in an energy-saving manner at any stage of their production.

Reference Signs List

100　laminated metal container
10　laminated metal sheet
20　metal sheet
21　front surface
22　back surface
30　polyester film

Claims

1.　A polyester film containing a polyester comprising polyethylene terephthalate as a component,

wherein net intensities of pole figures, obtained by X-ray diffractometry and indicating a crystal orientation distribution, satisfy the following formulas (1) and (2):

[Math. 1]

$$0.30 \leq I_{100}{}^{(60,\ 0)}/I_{100}{}^{(60,\ 90)} \leq 0.63 \qquad (1)$$

$$0.42 \leq I_{1\text{-}10}{}^{(60,\ 0)}/I_{1\text{-}10}{}^{(60,\ 90)} \leq 0.60 \qquad (2)$$

wherein in X-ray diffraction measurement using a CuKα ray, a diffraction peak appearing at 2θ = 26.5 ± 1.0° is assigned to 100 diffraction, and a diffraction peak appearing at 2θ = 23.0 ± 0.5° is assigned to 1-10 diffraction,
wherein the pole figures are measured at an elevation angle α = 0°, at which the bisector of incident X-ray and reflected X-ray is parallel to the film surface,
wherein in the 100-diffraction pole figure, an in-plane rotation angle β, at which the maximum diffraction intensity is observed when α = 60°, is 90°,
wherein $I_{100}{}^{(60,\ 0)}$ denotes the net intensity at α = 60° and β = 0° in the 100 diffraction-intensity pole figure,
wherein $I_{100}{}^{(60,\ 90)}$ denotes the net intensity at α = 60° and β = 90° in the 100 diffraction-intensity pole figure,
wherein $I_{1\text{-}10}{}^{(60,\ 0)}$ denotes the net intensity at α = 60° and β = 0° in the 1-10 diffraction-intensity pole figure, and
wherein $I_{1\text{-}10}{}^{(60,\ 90)}$ denotes the net intensity at α = 60° and β = 90° in the 1-10 diffraction-intensity pole figure.

2. The polyester film according to claim 1, wherein the sample standard deviation of thicknesses, measured in the direction of incident X-ray when β = 0° in the pole figures, is 10% or less of the average of the measured thicknesses.

3. The polyester film according to claim 1 or 2, comprising:

   a first layer containing a polyester comprising polyethylene terephthalate as a component; and
   a second layer laminated to the first layer and containing a polyester comprising polyethylene terephthalate as a component, and a lubricant.

4. The polyester film according to claim 3, wherein the first layer contains a pigment.

5. A method for producing a polyester film containing a polyester comprising polyethylene terephthalate as a component, the method comprising:

   a non-stretched film production step of extruding the polyester through a T-die using an extruder to obtain a non-stretched film; and
   a longitudinally uniaxially stretched film production step of longitudinally stretching the non-stretched film using a longitudinally uniaxially stretching machine equipped with a preheating roll and a stretching roll, to obtain a longitudinally uniaxially stretched film,
   wherein the longitudinal stretching in the longitudinally uniaxially stretched film production step is carried out at a stretch ratio of not less than 3.3 and not more than 7.5, and at a final preheating roll temperature of not less than 75°C and not more than 110°C.

6. A laminated metal sheet comprising: a metal sheet having a front surface and a back surface; and the polyester film according to any one of claims 1 to 4, bonded to at least one of the front surface and the back surface.

7. The laminated metal sheet according to claim 6, wherein a wide-angle X-ray diffraction spectrum satisfies the following formula (3):
[Math. 2]

$$I_{100}{}^{(90,\ 0)}/I_{amorphous}{}^{(90,\ 0)} \leq 1.5 \qquad (3)$$

wherein the wide-angle X-ray diffraction spectrum is measured by a θ-2θ method using a CuKα ray at sample angles of α = 90° and β = 0° in the pole figures,
wherein $I_{100}{}^{(90,\ 0)}$ denotes the net intensity of the 100-diffraction peak appearing at 2θ = 26.5 ± 1.0°, and
wherein $I_{amorphous}{}^{(90,\ 0)}$ denotes the net intensity of an amorphous halo appearing at 2θ = 20.0 ± 5.0°.

8. A method for manufacturing the laminated metal sheet according to Claim 6 or 7, comprising:

   a thermocompression bonding step of laminating a preheated metal sheet and the polyester film together by thermocompression bonding using a laminating roll to form a thermocompression bonded body, and

a water-cooling step of cooling the thermocompression bonded body with water within 7 seconds after the thermocompression bonding,

wherein, in the thermocompression bonding step, the polyester film and the metal sheet are laminated together by thermocompression bonding after the metal sheet is preheated in a range of -5°C to +50°C relative to the melting point of the polyester film.

9. A laminated metal container comprising the laminated metal sheet according to claim 6 or 7 as a material.

# FIG. 1

# FIG. 2

# FIG. 3

# FIG. 4

## FIG. 5

- ● $\alpha = 60°$ $\beta = 0°$
- ◉ $\alpha = 60°$ $\beta = 90°$

$\alpha = 0°$
$\beta = 0°$

$\alpha = 0°$
$\beta = 90°$

## FIG. 6

| PRODUCTION OF NON-STRETCHED FILM | S101 |
| PRODUCTION OF LONGITUDINALLY UNIAXIALLY STRETCHED FILM | S102 |
| HEAT SETTING | S103 |

# FIG. 7

```
┌─────────────────────────────┐
│   THERMOCOMPRESSION         │  ~S201
│        BONDING              │
└─────────────────────────────┘
              │
              ▼
┌─────────────────────────────┐
│      WATER COOLING          │  ~S202
└─────────────────────────────┘
```

# EP 4 733 348 A1

<table>
<tr><td colspan="2">INTERNATIONAL SEARCH REPORT</td><td>International application No.</td></tr>
<tr><td colspan="2"></td><td>PCT/JP2024/026880</td></tr>
</table>

**A. CLASSIFICATION OF SUBJECT MATTER**

*C08J 5/18*(2006.01)i; *B29C 55/06*(2006.01)i; *B32B 15/09*(2006.01)i; *B32B 27/36*(2006.01)i; *B29K 67/00*(2006.01)n
FI: C08J5/18 CFD; B29C55/06; B32B15/09 A; B32B15/09 Z; B32B27/36; B29K67:00

According to International Patent Classification (IPC) or to both national classification and IPC

**B. FIELDS SEARCHED**

Minimum documentation searched (classification system followed by classification symbols)

C08J5/18; B29C55/06; B32B15/09; B32B27/36; B29K67/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-298688 A (TOYO BOSEKI KABUSHIKI KAISHA) 27 October 2005 (2005-10-27) entire text, in particular, paragraphs [0065], [0101]-[0128] | 1, 2, 5-9 |
| X | JP 2005-297380 A (TOYO BOSEKI KABUSHIKI KAISHA) 27 October 2005 (2005-10-27) entire text, in particular, claims, paragraphs [0029], [0102]-[0128] | 1-9 |
| X | WO 2020/137783 A1 (JFE STEEL CORPORATION) 02 July 2020 (2020-07-02) entire text, in particular, claims, examples 1, 5, 6 | 5 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 September 2024** | **17 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/026880**

| Patent document cited in search report | | | Publication date (day/month/year) | Patent family member(s) | Publication date (day/month/year) |
|---|---|---|---|---|---|
| JP | 2005-298688 | A | 27 October 2005 | (Family: none) | |
| JP | 2005-297380 | A | 27 October 2005 | (Family: none) | |
| WO | 2020/137783 | A1 | 02 July 2020 | US 2022/0093882 A1 entire text, in particular, claims, examples 1, 5, 6 EP 3904075 A1 CN 113226738 A KR 10-2021-0107801 A SG 11202106641P A TW 202043033 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015012222 A

- JP 2014518781 W